# EUROPÄISCHE PATENTSCHRIFT

(11) **EP 2 655 852 B1**
(45) Veröffentlichungstag und Bekanntmachung des Hinweises auf die Patenterteilung: **22.04.2015**
(21) Anmeldenummer: 11778637.6
(22) Anmeldetag: 04.11.2011
(51) Int. Cl.: F02M 55/02, F02M 69/46, B21C 37/08, B23K 31/02, F02M 63/00, B23K 101/06

(54) **ROHRFÖRMIGER DRUCKSPEICHER, INSBESONDERE FÜR GEMISCHVERDICHTENDE, FREMDGEZÜNDETE BRENNKRAFTMASCHINEN**
TUBULAR PRESSURE ACCUMULATOR, IN PARTICULAR FOR MIXTURE COMPRESSING SPARK-IGNITION INTERNAL COMBUSTION ENGINES
ACCUMULATEUR DE PRESSION DE FORME TUBULAIRE, NOTAMMENT POUR DES MOTEURS À COMBUSTION INTERNE À ALLUMAGE PAR ÉTINCELLE ET COMPRESSION DU MÉLANGE

(30) Priorität: 23.12.2010 DE 102010064021
(43) Veröffentlichungstag der Anmeldung: 30.10.2013
(73) Patentinhaber: Robert Bosch GmbH, 70442 Stuttgart (DE)
(72) Erfinder: BOLZ, Thilo, 76703 Kraichtal (DE); LANG, Klaus, 70439 Stuttgart (DE); HAVERLAND, Daniel, 70329 Stuttgart (DE); SCHIERHOLZ, Norbert, 71706 Markgroeningen (DE); GRUSCHWITZ, Heiko, 71706 Markgroeningen (DE)
(86) Internationale Anmeldenummer: PCT/EP2011/069430
(87) Internationale Veröffentlichungsnummer: WO 2012/084326

(56) Entgegenhaltungen:
- WO-A1-96/06707
- WO-A1-2007/113317
- DE-A1-102006 061 563
- US-A1- 2005 133 008
- US-B1- 7 146 700

## Beschreibung

### Stand der Technik

Die Erfindung betrifft einen rohrförmigen Druckspeicher, insbesondere eine Brennstoffverteilerleiste, die für gemischverdichtende, fremdgezündete Brennkraftmaschinen zum Einsatz kommen kann.

Bei der Ausgestaltung eines rohrförmigen Druckspeichers, beispielsweise eines Hochdruckrails für die Benzindirekteinspritzung, können nahtlos gezogene Rohre oder geschweißte Rohre zum Einsatz kommen. Die geschweißten Rohre können aus einem Halbzeug in Form eines Bandes oder einer Blechtafel gerollt und dann Längsnaht- oder schräg umlaufend geschweißt werden. Nach dem Schweißvorgang kann das Rohr als Halbzeug beim Hersteller des Hochdruckrails weiter bearbeitet werden, wobei dann mittels Zusatzprozessen, wie Zerspanen oder Stanzen, die Querbohrungen und die Enden des Rohres bearbeitet werden. Die Querbohrungen dienen beispielsweise für einen hydraulischen Anschluss von Zulauf, Verbindungsleitungen und Einspritzventiltassen. Diese Bohrungen können gestanzt und nachträglich entgratet werden. Die nachträgliche Entgratung ist allerdings aufwändig. Wird das Entgraten zur Vereinfachung und aus Kostengründen weggelassen, dann bleiben jedoch wesentliche Schwachstellen, die zu einer Schwächung des Bauteils unter pulsierendem Innendruck führen. Wird das Entgraten weggelassen, dann ist zum Erzielen der erforderlichen Bauteilfestigkeit somit eine Überdimensionierung des Rohres notwendig, die wiederum zu höheren Kosten, insbesondere höheren Materialkosten, führt.

Aus der WO 2007/113317 A1 ist bereits ein flaches Wärmetauscherrohr bekannt, das anstelle eines Hydroforming-Verfahrens mittels Biegen und nachfolgendem Schweißen hergestellt wird. Für die Herstellung wird zuerst ein ca. 60 mm dickes Metallblech bereitgestellt. Daraufhin wird eine Vielzahl von Sicken bzw. Furchen über die gesamte Länge des Bleches auf zwei Seiten rechts und links bezogen auf eine mittlere Längsachse des Bleches eingeprägt. Bewusst ausgelassen wird dabei ein mittlerer Längsbereich des Bleches. Dieser mittlere Längsbereich des Bleches wird bewusst mit einer Einprägung von Sicken ausgelassen, da in Längsrichtung an dieser Linie entlang eine Längsabprägung erfolgt. Diese Längsabprägung mit einer deutlichen Reduzierung der Materialdicke des Bleches dient der nachfolgend vorzunehmenden Biegung der beiden Blechseiten, da die Biegelinie genau in diese Längsabprägung gelegt wird. Nach dem Biegen und Verschweißen liegt ein flaches Wärmetauscherrohr vor, das auf beiden gegenüberliegenden Flachseiten die bereits im ebenen Blechzustand eingebrachten Sicken aufweist.

Aus der US 7,146,700 B1 ist bereits eine rohrförmige Brennstoffverteilerleitung bekannt, die einen integrierten Druckdämpfer aufweist, der durch verschiedene Verfahrensweisen, u.a. Hydroforming ausgebildet werden kann.

### Offenbarung der Erfindung

Der erfindungsgemäße rohrförmige Druckspeicher mit den Merkmalen des Anspruchs 1 hat den Vorteil, dass die Herstellbarkeit verbessert ist und/oder neue Konstruktionsmerkmale realisiert werden können. Speziell kann der rohrförmige Druckspeicher der Erfindung mit verringerten Herstellungskosten hergestellt werden, indem Herstellungsprozesse, wie beispielsweise zerspanende Verfahren, vereinfacht sind und eine optimierte Materialauslegung, insbesondere eine dünnwandige Ausgestaltung, möglich ist.

Durch die in den Unteransprüchen aufgeführten Maßnahmen sind vorteilhafte Weiterbildungen des im Anspruch 1 angegebenen rohrförmigen Druckspeichers möglich.

Bei der Herstellung des rohrförmigen Druckspeichers werden ein oder mehrere Konstruktionsmerkmale vor dem Schweißen der gebogenen Metallwand eingebracht. Hierbei ist es allerdings denkbar, dass gegebenenfalls auch nachträglich, das heißt nach dem Schweißen, ein oder mehrere Schritte zur Weiterbearbeitung des rohrförmigen Druckspeichers erfolgen, falls dies zweckmäßig ist. Zur Vereinfachung der Herstellung und zur Senkung der Produktionskosten können die Prozesse zur Ausgestaltung der Konstruktionsmerkmale allerdings in vorteilhafter Weise so verändert werden, dass in Bezug auf die Ausgestaltung der Metallwand höhere Belastungen möglich sind. Somit eignet sich der rohrförmige Druckspeicher für höhere Belastungen. Andererseits kann bei vorgegebener Mindestbelastbarkeit das Ausgangsmaterial für die Metallwand geringeren Anforderungen entsprechen, insbesondere dünnwandiger ausgestaltet sein, wodurch sich die Herstellungskosten auch in Bezug auf eine Bearbeitung des geschweißten Metallrohrs verringern.

Vorteilhaft ist es, dass das Konstruktionsmerkmal durch Bearbeiten der zumindest im Wesentlichen ebenen Metallwand und durch das Biegen der ebenen Metallwand in die rohrförmig gebogene Metallwand ausgestaltet ist. Hierbei wird auf diese Weise zumindest ein Konstruktionsmerkmal ausgestaltet. Allerdings werden, sofern dies zweckmäßig ist, vorzugsweise alle oder fast alle Konstruktionsmerkmale bereits in der ebenen Metallwand ausgestaltet, so dass eine Nachbearbeitung nicht oder nur im geringen Umfang erforderlich ist.

Außerdem ist es vorteilhaft, dass ein Konstruktionsmerkmal, das durch das vor dem Schweißen erfolgende Bearbeiten der Metallwand und das Biegen der Metallwand ausgestaltet ist, eine an einer Innenseite der gebogenen und geschweißten Metallwand entgratete Bohrung ist. Bei einer herkömmlichen Ausgestaltung einer Bohrung durch Bearbeiten des geschweißten oder gezogenen Rohrs entsteht an der Innenseite des Rohrs ein Grat. Die Entgratung gestaltet sich dann entsprechend aufwändig. Bei der Ausgestaltung der Bohrung in der beispielsweise ebenen Metallwand kann die Entgratung hingegen äußerst einfach erfolgen. Eine weitere Möglichkeit besteht darin, dass die Bohrungen und dergleichen möglichst in einer Richtung durch die ebene Metallwand ausgeführt werden. Die Metallwand kann dann so gebogen werden, dass sich die Grate an der Außenseite der gebogenen und geschweißten Metallwand befinden, während die Innenseite gratfrei ist. Somit kann auch ohne ein Entgraten eine gratfreie Innenseite realisiert werden. Dies hat den Vorteil, dass gerade die an der Innenseite vorgesehenen Grate, die die Festigkeit deutlich herabsenken, von vornherein entfallen und die Grate an der weniger problematischen Außenseite verbleiben. Besonders durch ein Stanzen am Band kann durch den Stanzeinzug automatisch auf einer Seite, die dann im gebogenen Zustand innen liegt, eine Gratfreiheit erzielt werden, während auf der anderen Seite der beim Stanzen erzeugte Grat entsteht und gegebenenfalls verbleibt. Falls dies zweckmäßig ist, kann selbst eine spätere Entgratung mit geringerem Aufwand als an der Innenseite durchgeführt werden. Je nach Ausgestaltung, kann dann das Konstruktionsmerkmal, das durch das vor dem Schweißen erfolgende Bearbeiten der Metallwand und das Biegen der Metallwand ausgestaltet ist, an der Außenseite der gebogenen und geschweißten Metallwand den Grat aufweisen oder das Konstruktionsmerkmal ist beidseitig entgratet und insbesondere durch eine beidseitig entgratete Bohrung gebildet.

Vorteilhaft ist es auch, dass ein Konstruktionsmerkmal, das durch das vor dem Schweißen erfolgende Bearbeiten der Metallwand und das Biegen der Metallwand ausgestaltet ist, eine Bohrung ist, die bezüglich einer Umfangsrichtung einen durch den Biegeradius der Biegung der Metallwand vorgegebenen Öffnungswinkel aufweist. Hierdurch kann eine zumindest näherungsweise konische Ausgestaltung der Bohrung realisiert werden. In einfacher Weise kann hierbei eine zylinderförmige Bohrung in der ebenen Metallwand ausgestaltet werden, die durch den Biegevorgang die (teil-) konische Ausgestaltung erlangt.

Ferner ist es vorteilhaft, dass ein Konstruktionsmerkmal, das durch das vor dem Schweißen erfolgende Bearbeiten der Metallwand und das Biegen der Metallwand ausgestaltet ist, eine durchgehende Ausnehmung ist, die zumindest an einer Innenseite der gebogenen und geschweißten Metallwand einen erweiterten Querschnitt aufweist. Speziell ist es vorteilhaft, dass dieses Konstruktionsmerkmal durch eine in die ebene Metallwand eingebrachte Stufenbohrung und durch Biegen der ebenen Metallwand in die rohrförmig gebogene Metallwand ausgestaltet ist. Somit können Konstruktionsmerkmale realisiert werden, die bei einer Bearbeitung eines gezogenen oder geschweißten Rohres praktisch nicht möglich sind.

Vorteilhaft ist es auch, dass ein Konstruktionsmerkmal, das durch das vor dem Schweißen erfolgende Bearbeiten der Metallwand und das Biegen der Metallwand ausgestaltet ist, eine Abflachung oder ein Durchzug ist. Hierbei können die Abflachung beziehungsweise der Durchzug durch ein- oder beidseitiges Bearbeiten der ebenen Metallwand ausgestaltet sein. Insbesondere ist es möglich, dass die ebene Metallwand bei der Bearbeitung auf eine Auflage aufgelegt wird. Somit lassen sich diese Konstruktionsmerkmale in einfacher Weise realisieren, was bei der Nachbearbeitung eines gezogenen oder geschweißten Rohres nicht oder nur mit unverhältnismäßig großem Aufwand möglich ist.

Außerdem ist es vorteilhaft, dass ein Konstruktionsmerkmal, das durch das vor dem Schweißen erfolgende Bearbeiten der Metallwand und das Biegen der Metallwand ausgestaltet ist, als Langloch, als Langloch mit erweiterten Enden oder als O-förmiges Langloch ausgestaltet ist. Hierbei können auch mehrere solche Konstruktionsmerkmale an einem einzigen rohrförmigen Druckspeicher vorgesehen sein. Hierdurch lassen sich weitgehend beliebig Anschlussmöglichkeiten realisieren. Durch das Stanzen im ebenen Blech lassen sich auch Geometrien realisieren, die im geschweißten oder gezogenen Rohr nicht oder nur sehr aufwändig realisierbar sind. Insbesondere können spannungsoptimierte Geometrien realisiert werden.

Vorteilhaft ist es auch, dass die Schweißnaht in einem Bereich der gebogenen und geschweißten Metallwand angeordnet ist, der mechanisch am geringsten belastet wird. Durch Bearbeiten der ebenen Metallwand können weitgehend unabhängig von der Position der späteren Schweißnaht Bearbeitungsschritte, insbesondere ein Zerspanen oder Stanzen, ausgeführt werden. Dies ermöglicht andererseits auch, dass die Anordnung der Konstruktionsmerkmale in der ebenen Metallwand in Bezug auf die Position der später ausgestalteten Schweißnaht so gewählt sind, dass die Schweißnaht in den mechanisch am geringsten belasteten Bereich gelegt wird. Außerdem kann durch gezielte Zuordnung der Konstruktionsmerkmale, beispielsweise Querbohrungen, zur späteren Schweißnaht, der Zusatzaufwand im späteren Prozess reduziert werden, den ansonsten die Ausrichtung der Schweißnaht erfordern würde.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine ebene Metallwand zur Ausgestaltung eines rohrförmigen Druckspeichers in einer schematischen Darstellung entsprechend einem Ausführungsbeispiel der Erfindung;
Fig. 2 einen auszugsweisen Schnitt durch die in Fig. 1 dargestellte ebene Metallwand entsprechend dem Ausführungsbeispiel der Erfindung;
Fig. 3 die in Fig. 1 dargestellte Metallwand entlang der mit II bezeichneten Schnittlinie im gebogenen und geschweißten Zustand zur Ausgestaltung des rohrförmigen Druckspeichers entsprechend dem Ausführungsbeispiel der Erfindung;
Fig. 4 den in Fig. 3 mit IV bezeichneten Ausschnitt eines rohrförmigen Druckspeichers entsprechend einem zweiten Ausführungsbeispiel der Erfindung;
Fig. 5 den in Fig. 3 mit IV bezeichneten Ausschnitt eines rohrförmigen Druckspeichers entsprechend einem dritten Ausführungsbeispiel der Erfindung;
Fig. 6 den in Fig. 3 mit IV bezeichneten Ausschnitt eines rohrförmigen Druckspeichers entsprechend einem vierten Ausführungsbeispiel der Erfindung;
Fig. 7 den in Fig. 3 dargestellten Schnitt durch einen rohrförmigen Druckspeicher entsprechend einem fünften Ausführungsbeispiel der Erfindung;
Fig. 8 den in Fig. 3 dargestellten Schnitt durch einen rohrförmigen Druckspeicher entsprechend einem sechsten Ausführungsbeispiel der Erfindung;
Fig. 9 einen rohrförmigen Druckspeicher in einer auszugsweisen Darstellung entsprechend einem siebten Ausführungsbeispiel der Erfindung und
Fig. 10 den in Fig. 3 mit IV bezeichneten Ausschnitt eines rohrförmigen Druckspeichers entsprechend einem achten Ausführungsbeispiel der Erfindung.

### Ausführungsformen der Erfindung

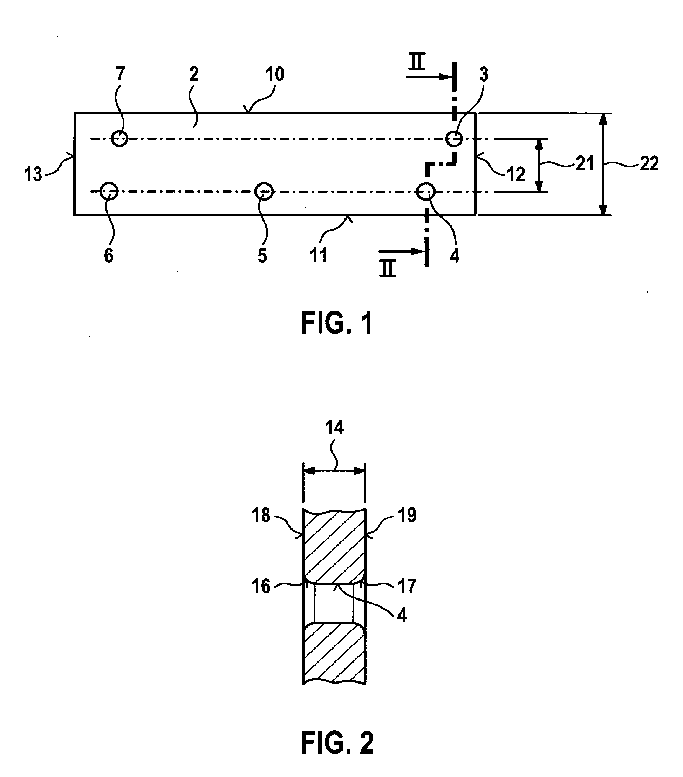

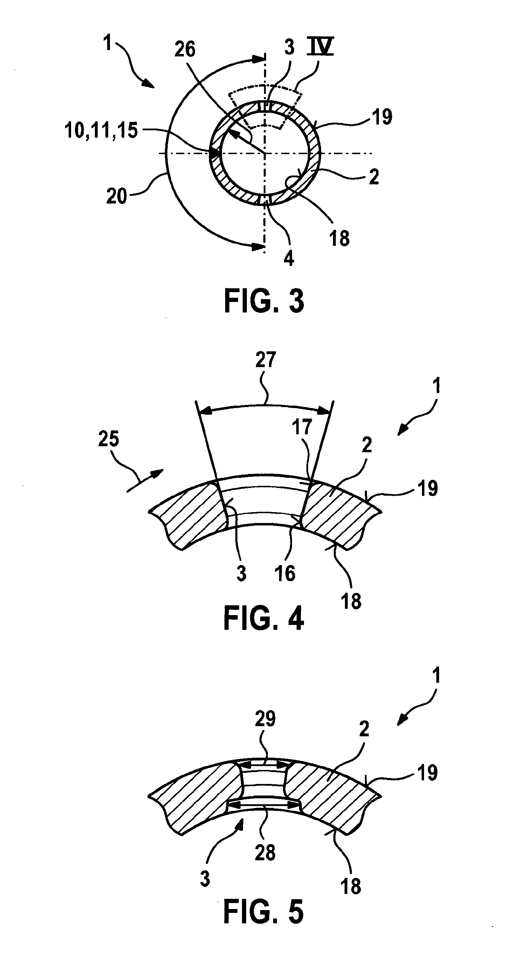

Fig. 1, Fig. 2 und Fig. 3 veranschaulichen die Ausgestaltung eines rohrförmigen Druckspeichers 1 eines ersten Ausführungsbeispiels der Erfindung. Hierbei zeigt die Fig. 1 eine ebene Metallwand 2 in einer schematischen Darstellung. Die Fig. 2 zeigt einen auszugsweisen Schnitt entlang der in Fig. 1 mit II bezeichneten Schnittlinie in einer schematischen Darstellung. Fig. 3 zeigt den rohrförmigen Druckspeicher 1, der die gebogene und geschweißte Metallwand 2 umfasst. Die besondere Ausgestaltung des rohrförmigen Druckspeichers 1 des Ausführungsbeispiels ergibt sich hierbei durch die Reihenfolge der Bearbeitung der Metallwand 2. Der rohrförmige Druckspeicher 1 eignet sich besonders als Brennstoffverteilerleiste für ein Brennstoffeinspritzsystem einer Brennkraftmaschine. Speziell kann der rohrförmige Druckspeicher 1 als Brennstoffverteilerleiste für gemischverdichtende, fremdgezündete Brennkraftmaschinen dienen. Der rohrförmige Druckspeicher 1 der Erfindung eignet sich allerdings auch für andere Anwendungsfälle.

Die ebene Metallwand 2, die in Fig. 1 dargestellt ist, kann aus einem Band, einer Blechtafel oder dergleichen ausgestanzt sein. Hierbei werden in die Metallwand 2 vor, mit oder nach dem Ausstanzen Konstruktionsmerkmale 3, 4, 5, 6, 7 eingebracht. In diesem Ausführungsbeispiel sind die Konstruktionsmerkmale Bohrungen 3 bis 7. Die Bohrungen 3 bis 7 können hierbei unterschiedliche Durchmesser aufweisen. Die Konstruktionsmerkmale 3 bis 7 können beispielsweise zur Realisierung von Anschlussstellen an dem rohrförmigen Druckspeicher 1 dienen.

Die Metallwand 2 weist Längsseiten 10, 11 auf. Ferner weist die Metallwand 2 Stirnseiten 12, 13 auf. Bei der ebenen Ausgestaltung der Metallwand 2 sind die Längsseiten 10, 11 zunächst voneinander abgewandt. Dann wird die Metallwand 2 rohrförmig gebogen. Hierbei gelangen die Längsseiten 10, 11 aneinander, beispielsweise auf Stoß. In Abhängigkeit von einer Materialstärke 14 der Metallwand 2 kann allerdings auch ein gewisses Überlappen im Bereich der Längsseiten 10, 11 sinnvoll sein. Im Bereich der Längsseiten 10, 11 erfolgt durch eine Schweißnaht 15 eine Verbindung durch Schweißen. Hierdurch sind die Längsseiten 10, 11 der rohrförmig gebogenen Metallwand 2 durch die Schweißnaht miteinander verbunden. Da die beiden Längsseiten 10, 11 durch die Biegung zueinander gelangen, sind die Längsseiten 10, 11 einander zugeordnet.

Wie in Fig. 2 veranschaulicht, kann beispielsweise die Bohrung 4 vor dem Biegen in einfacher Weise ausgestaltet und bearbeitet werden. Insbesondere kann durch Anprägungen 16, 17 eine beidseitige Entgratung bereits beim Stanzen der Bohrung 4 erfolgen. Eine Seite 18 der ebenen Metallwand 2 wird im gebogenen Zustand zur Innenseite 18 der gebogenen Metallwand 2. Entsprechend wird eine Seite 19 im gebogenen Zustand zur Außenseite 19 der gebogenen Metallwand 2.

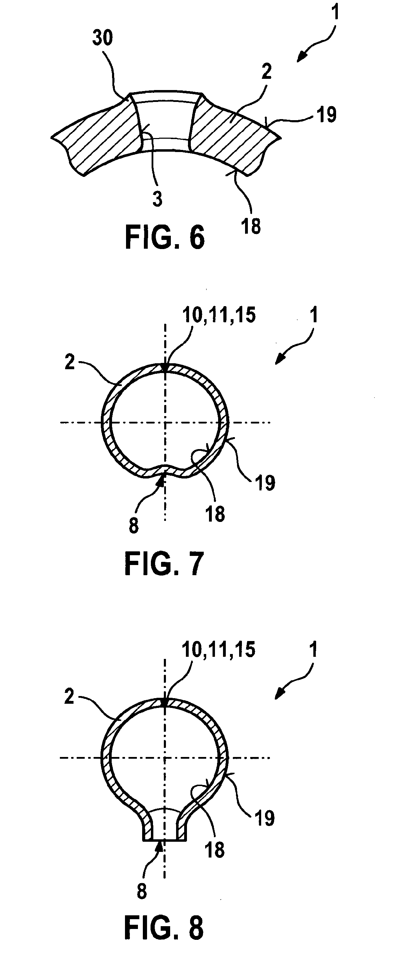

Da sich Grate oder dergleichen gerade an der Innenseite 18 in Bezug auf die Festigkeit des rohrförmigen Druckspeichers 1 ungünstig auswirken, erfolgt vorzugsweise zumindest an der Seite 18 eine Entgratung der Konstruktionsmerkmale 3 bis 7. Möglich ist es auch, dass bei der Ausgestaltung der Konstruktionsmerkmale 3 bis 7 eine Bearbeitungsrichtung so gewählt ist, dass Grate gezielt an der Außenseite 19 entstehen, während eine Gratbildung an der Innenseite 18 bearbeitungsbedingt überhaupt nicht auftritt. Solch eine Ausgestaltung ist anhand der Fig. 6 näher beschrieben.

Fig. 3 zeigt den rohrförmigen Druckspeicher 1 in einer schematischen Schnittdarstellung entlang der in Fig. 1 mit II bezeichneten Schnittlinie. Die Ausgestaltung des rohrförmigen Druckspeichers mit den Konstruktionsmerkmalen 3 bis 7 ergibt sich hierbei zum einen aus der bearbeiteten ebenen Metallwand 2 und zum anderen durch die Biegung und anschließende Verschweißung. Entsprechend dem Schnitt entlang der mit Fig. 2 bezeichneten Schnittlinie sind in der Fig. 3 die Konstruktionsmerkmale 3, 4 in Form von Bohrungen 3, 4 dargestellt. Ein Winkel 20, der in diesem Ausführungsbeispiel gleich 180° ist, ergibt sich hierbei aus einem Abstand 21 der Mittelpunkte der beiden Konstruktionsmerkmale 3, 4 in Bezug auf eine Breite 22 der ebenen Metallwand 2, die gleich dem Abstand der beiden Längsseiten 10, 11 der ebenen Metallwand 2 voneinander ist. Eine gegebenenfalls erforderliche Überlappung ist hierbei eingerechnet. Außerdem wird durch die bereits bekannte Position der Schweißnaht 15, die nämlich an den Längsseiten 10, 11 der ebenen Metallwand 2 nach dem Biegen entstehen wird, auch eine Positionierung der Konstruktionsmerkmale 3 bis 7 relativ zu der Schweißnaht 15 ermöglicht. Somit können sowohl die Positionen der einzelnen Konstruktionsmerkmale 3 bis 7 untereinander als auch die Position der Schweißnaht 15 fast beliebig vorgegeben sein. Speziell kann die Schweißnaht 15 immer in den mechanisch am geringsten belasteten Bereich des rohrförmigen Druckspeichers 1 gelegt werden.

Außerdem vereinfacht sich die Herstellung, da die Konstruktionsmerkmale 3 bis 7 von vornherein in Bezug auf die Längsseiten 10, 11 und somit in Bezug auf die spätere Schweißnaht 15 festgelegt sind. Bei einer Herstellung, bei der in das geschweißte Rohr nachträglich Bohrungen oder dergleichen eingebracht werden, besteht nämlich das Problem, dass die Schweißnaht gezielt ausgerichtet werden muss, damit beispielsweise Bohrungen einen gewissen Mindestabstand von dieser einhalten.

Fig. 4 zeigt den in Fig. 3 mit IV bezeichneten Ausschnitt des rohrförmigen Druckspeichers 1 entsprechend einem zweiten Ausführungsbeispiel. In diesem Ausführungsbeispiel ist das als Bohrung 3 ausgestaltete Konstruktionsmerkmal 3 durch eine zunächst zylinderförmige Bohrung 3 ausgestaltet. Ferner sind Anfasungen 16, 17 zum beidseitigen Entgraten vorgesehen. Durch das Biegen der Metallwand 2 in eine hohlzylinderförmige Geometrie mit kreisringförmigem Querschnitt, wie sie auch in der Fig. 3 veranschaulicht ist, erhält die Bohrung 3 bezüglich einer Umfangsrichtung 25 einen durch den Biegeradius 26 (Fig. 3) der Biegung der Metallwand 2 vorgegebenen Öffnungswinkel 27. Hierdurch wird eine (teil-) konische Ausgestaltung der Bohrung 3 erzielt.

Fig. 5 zeigt den in Fig. 3 mit IV bezeichneten Ausschnitt des rohrförmigen Druckspeichers 1 entsprechend einem dritten Ausführungsbeispiel. In diesem Ausführungsbeispiel ist das Konstruktionsmerkmal 3, das durch ein vor dem Schweißen erfolgendes Bearbeiten der Metallwand 2 und das Biegen der Metallwand 2 ausgestaltet ist, eine durchgehende Ausnehmung 3, die an der Innenseite 18 einen erweiterten Querschnitt 28 aufweist. Ferner weist die Ausnehmung 3 in diesem Ausführungsbeispiel auch an der Außenseite 19 einen erweiterten Querschnitt 29 auf. Das Konstruktionsmerkmal 3 kann hierbei durch eine in die ebene Metallwand 2 eingebrachte Stufenbohrung 3 und durch Biegen der ebenen Metallwand 2 in die rohrförmig gebogene Metallwand 2 ausgestaltet sein. Hierdurch können insbesondere an der Innenseite 18 konstruktive Ausgestaltungen des Konstruktionsmerkmal 3 mit relativ geringem Aufwand realisiert werden, da diese bereits an der noch ebenen Metallwand 2 ausgeführt werden.

Fig. 6 zeigt den in Fig. 3 mit IV bezeichneten Ausschnitt des rohrförmigen Druckspeichers 1 entsprechend einem vierten Ausführungsbeispiel. In diesem Ausführungsbeispiel ist das Konstruktionsmerkmal 3, beispielsweise eine Bohrung 3, so in die ebene Metallwand 2 eingebracht, dass prinzipbedingt an der Außenseite 19 ein Grat 30 entsteht, während die Innenseite 18 gratfrei bleibt. Hierfür wird bereits bei der ebenen Metallwand 2 festgelegt, dass die Seite 18 nach dem Biegen die Innenseite ist, während entsprechend die Seite 19 nach dem Biegen die Außenseite 19 ist. Durch diese Festlegung können alle Konstruktionsmerkmale 3 bis 7 so ausgestaltet werden, dass an der Innenseite 18 kein oder zumindest kein ausgeprägter Grat entsteht. Gegebenenfalls können auch einzelne Konstruktionsmerkmale 3 bis 7 an der Innenseite 18 und/oder an der Außenseite 19 entgratet werden, was vorzugsweise bereits an der noch ebenen Metallwand 2 erfolgt. Speziell bei dieser Ausgestaltung können die Geometrien durch Stanzen und somit sehr kostengünstig in dem ebenen Blech oder dergleichen ausgestaltet werden.

Fig. 7 zeigt den in Fig. 3 mit IV bezeichneten Ausschnitt des rohrförmigen Druckspeichers 1 entsprechend einem fünften Ausführungsbeispiel. In diesem Ausführungsbeispiel ist ein Konstruktionsmerkmal 8 vorgesehen, das durch ein vor dem Schweißen erfolgendes Bearbeiten der ebenen Metallwand 2 und das Biegen der Metallwand 2 ausgestaltet ist. Hierbei wird das Konstruktionsmerkmal 8 durch Ausgestalten einer Vertiefung von der Seite 19 zur Seite 18 an der ebenen Metallwand 2 und anschließendes Biegen und Verschweißen ausgebildet. Das Konstruktionsmerkmal 8 ergibt sich nach dem Biegen und Schweißen als Abflachung an dem rohrförmigen Druckspeicher 1. Somit können gezielt präzise dimensionierte Abflachungen, insbesondere die Abflachung 8, an dem rohrförmigen Druckspeicher 1 ausgestaltet werden.

Fig. 8 zeigt den in Fig. 3 dargestellten Schnitt durch einen rohrförmigen Druckspeicher 1 entsprechend einem sechsten Ausführungsbeispiel. In diesem Ausführungsbeispiel ist das Konstruktionsmerkmal 8, das durch ein vor dem Schweißen erfolgendes Bearbeiten der Metallwand 2 und das Biegen der Metallwand 2 ausgestaltet ist, ein Durchzug 8. Solch ein Durchzug 8 kann in der noch ebenen Metallwand 2 verhältnismäßig einfach ausgestaltet werden. Hierbei kann solch ein geometrisches Konstruktionsmerkmal 8 spanfrei ausgebildet werden. Somit kann ein zusätzliches Bauteil eingespart werden.

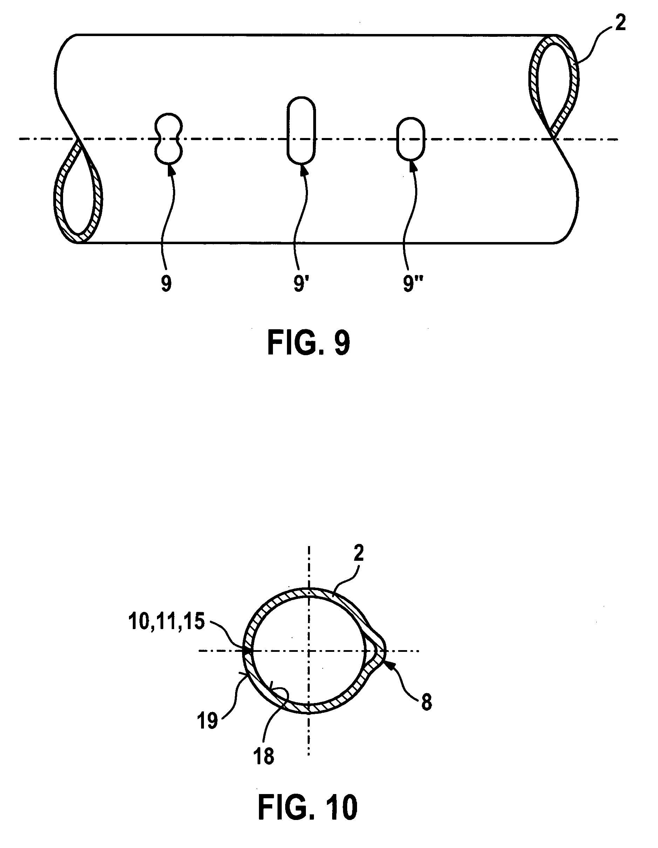

Fig. 9 zeigt einen rohrförmigen Druckspeicher 1 in einer auszugsweisen Darstellung entsprechend einem siebten Ausführungsbeispiel. In diesem Ausführungsbeispiel sind Konstruktionsmerkmal 9, 9', 9" vorgesehen. Das Konstruktionsmerkmal 9, das durch ein vor dem Schweißen erfolgendes Bearbeiten der noch ebenen Metallwand 2 und durch das Biegen der Metallwand ausgestaltet ist, ist als Langloch 9 mit erweiterten Enden ausgestaltet. Die Konstruktionsmerkmale 9', 9" sind ebenfalls durch ein vor dem Schweißen erfolgendes Bearbeiten der ebenen Metallwand 2 und das Biegen der Metallwand 2 ausgestaltet. Das Konstruktionsmerkmal 9' ist als Langloch 9' ausgestaltet. Das Konstruktionsmerkmal 9" ist als O-förmiges Langloch 9" ausgestaltet. Somit können auch komplex ausgestaltete Konstruktionsmerkmale 9, 9', 9" realisiert werden. Dies kann in vorteilhafter Weise durch Stanzen erfolgen.

Somit kann der rohrförmige Druckspeicher 1 entsprechend einem der Ausführungsbeispiele der Erfindung Konstruktionsmerkmale 3 bis 7, 8, 9, 9', 9" aufweisen, wobei auch geeignete Kombinationen solcher Konstruktionsmerkmale 3 bis 7, 8, 9, 9', 9" in Bezug auf den jeweiligen Anwendungsfall möglich sind. Hierdurch können auch Konstruktionsmerkmale realisiert werden, die bei einer Bearbeitung eines gezogenen oder geschweißten Rohres nicht oder zumindest praktisch nicht realisierbar sind. Beispielsweise kann eine Geometrie, wie der in Fig. 6 dargestellte, außenliegende Grat 30 bei einem gezogenen oder geschweißten Rohr nicht ausgestaltet werden.

Fig. 10 zeigt den in Fig. 3 mit IV bezeichneten Ausschnitt eines rohrförmigen Druckspeichers entsprechend einem achten Ausführungsbeispiel der Erfindung. In diesem Ausführungsbeispiel ist das Konstruktionsmerkmal 8 eine nach außen geformte Geometrie 8. Durch Bearbeiten der Metallwand 2 im ebenen Zustand können solche Konstruktionsmerkmale 8 in einfacher Weise an der Metallwand realisiert werden. Hierbei ist insbesondere eine gezielte lokale Bearbeitung möglich. Somit ist es auch möglich, dass ein Konstruktionsmerkmal 8, das durch das vor dem Schweißen erfolgende Bearbeiten der Metallwand 2 und das Biegen der Metallwand 2 ausgestaltet ist, eine nach außen geformte Geometrie 8, insbesondere eine bauchförmige Erhebung 8, ist.

Die Erfindung ist nicht auf die beschriebenen Ausführungsbeispiele beschränkt.

## Patentansprüche

1. Rohrförmiger Druckspeicher (1), insbesondere Brennstoffverteilerleiste für gemischverdichtende, fremdgezündete Brennkraftmaschinen, mit einer Metallwand (2), die rohrförmig gebogen ist, wobei einander zugeordnete Längsseiten (10, 11) der rohrförmig gebogenen Metallwand (2) durch zumindest eine Schweißnaht (15) miteinander verbunden sind, wobei die rohrförmig gebogene Metallwand (2) zumindest ein Konstruktionsmerkmal (3 - 7, 8, 9, 9', 9") aufweist, das durch ein vor dem Schweißen erfolgendes Bearbeiten der Metallwand (2) und das Biegen der Metallwand (2) ausgestaltet ist,
**dadurch gekennzeichnet,**
**dass** die Metallwand (2) nach dem Biegen eine hohlzylindrische Geometrie mit kreisringförmigem Querschnitt aufweist.

2. Rohrförmiger Druckspeicher nach Anspruch 1,
**dadurch gekennzeichnet,**
**dass** das Konstruktionsmerkmal (3 - 7, 8, 9, 9', 9") durch Bearbeiten der zumindest im Wesentlichen ebenen Metallwand (2) und durch das Biegen der ebenen Metallwand (2) in die rohrförmig gebogene Metallwand (2) ausgestaltet ist.

3. Rohrförmiger Druckspeicher nach Anspruch 1 oder 2,
**dadurch gekennzeichnet,**
**dass** ein Konstruktionsmerkmal (3, 4), das durch das vor dem Schweißen erfolgende Bearbeiten der Metallwand (2) und das Biegen der Metallwand (2) ausgestaltet ist, eine an einer Innenseite (18) der gebogenen und geschweißten Metallwand (2) entgratete Bohrung (3, 4) ist
oder
**dass** ein Konstruktionsmerkmal (3, 4), das durch das vor dem Schweißen erfolgende Bearbeiten der Metallwand (2) und das Biegen der Metallwand (2) ausgestaltet ist, eine beidseitig entgratete Bohrung (3, 4) ist.

4. Rohrförmiger Druckspeicher nach einem der Ansprüche 1 bis 3,
**dadurch gekennzeichnet,**
**dass** ein Konstruktionsmerkmal (3), das durch das vor dem Schweißen erfolgende Bearbeiten der Metallwand (2) und das Biegen der Metallwand (2) ausgestaltet ist, eine Bohrung (3) ist, die bezüglich einer Umfangsrichtung (25) einen durch den Biegeradius (26) der Biegung der Metallwand (2) vorgegebenen Öffnungswinkel (27) aufweist.

5. Rohrförmiger Druckspeicher nach einem der Ansprüche 1 bis 4,
**dadurch gekennzeichnet,**
**dass** ein Konstruktionsmerkmal (3), das durch das vor dem Schweißen erfolgende Bearbeiten der Metallwand (2) und das Biegen der Metallwand (2) ausgestaltet ist, eine durchgehende Ausnehmung (3) ist, die zumindest an einer Innenseite (18) der gebogenen und geschweißten Metallwand (2) einen erweiterten Querschnitt (28) aufweist,
und/oder
**dass** ein Konstruktionsmerkmal (3) durch eine in die ebene Metallwand (2) eingebrachte Stufenbohrung (3) und durch Biegen der ebenen Metallwand (2) in die rohrförmig gebogene Metallwand (2) ausgestaltet ist.

6. Rohrförmiger Druckspeicher nach einem der Ansprüche 1 bis 5,
**dadurch gekennzeichnet,**
**dass** ein Konstruktionsmerkmal (3), das durch das vor dem Schweißen erfolgende Bearbeiten der Metallwand (2) und das Biegen der Metallwand (2) ausgestaltet ist, an einer Außenseite (19) der gebogenen und geschweißten Metallwand (2) einen Grat (30) aufweist.

7. Rohrförmiger Druckspeicher nach einem der Ansprüche 1 bis 6,
**dadurch gekennzeichnet,**
**dass** ein Konstruktionsmerkmal (8), das durch das vor dem Schweißen erfolgende Bearbeiten der Metallwand (2) und das Biegen der Metallwand (2) ausgestaltet ist, eine Abflachung (8) ist.

8. Rohrförmiger Druckspeicher nach einem der Ansprüche 1 bis 7,
**dadurch gekennzeichnet,**
**dass** ein Konstruktionsmerkmal (8), das durch das vor dem Schweißen erfolgende Bearbeiten der Metallwand (2) und das Biegen der Metallwand (2) ausgestaltet ist, ein Durchzug (8) ist.

9. Rohrförmiger Druckspeicher nach einem der Ansprüche 1 bis 8,
**dadurch gekennzeichnet,**
**dass** ein Konstruktionsmerkmal (8), das durch das vor dem Schweißen erfolgende Bearbeiten der Metallwand (2) und das Biegen der Metallwand (2) ausgestaltet ist, eine nach außen geformte Geometrie (8), insbesondere eine bauchförmige Erhebung (8), ist.

10. Rohrförmiger Druckspeicher nach einem der Ansprüche 1 bis 9,
**dadurch gekennzeichnet,**
**dass** ein Konstruktionsmerkmal (9'), das durch das vor dem Schweißen erfolgende Bearbeiten der Metallwand (2) und das Biegen der Metallwand (2) ausgestaltet ist, als Langloch (9') ausgestaltet ist
und/oder
**dass** ein Konstruktionsmerkmal (9), das durch das vor dem Schweißen erfolgende Bearbeiten der Metallwand (2) und das Biegen der Metallwand (2) ausgestaltet ist, als Langloch (9) mit erweiterten Enden ausgestaltet ist
und/oder
**dass** ein Konstruktionsmerkmal (9"), das durch das vor dem Schweißen erfolgende Bearbeiten der Metallwand (2) und das Biegen der Metallwand (2) ausgestaltet ist, als O-förmiges Langloch (9") ausgestaltet ist.

11. Rohrförmiger Druckspeicher nach einem der Ansprüche 1 bis 10,
**dadurch gekennzeichnet,**
**dass** die Schweißnaht (15) in einem Bereich der gebogenen und geschweißten Metallwand (2) angeordnet ist, der mechanisch am geringsten belastet wird.

## Claims

1. Tubular pressure accumulator (1), in particular fuel distributor rail for mixture-compressing, applied-ignition internal combustion engines, having a metal wall (2) which is bent in a tubular manner, longitudinal sides (10, 11) which are assigned to one another of the metal wall (2) which is bent in a tubular manner being connected to one another by way of at least one welded seam (15), the metal wall (2) which is bent in a tubular manner having at least one structural feature (3-7, 8, 9, 9', 9'') which is configured by way of machining of the metal wall (2) which takes place before the welding and by way of bending of the metal wall (2), **characterized in that**, after the bending, the metal wall (2) has a hollow-cylindrical geometry with a circularly annular cross section.

2. Tubular pressure accumulator according to Claim 1, **characterized in that** the structural feature (3-7, 8, 9, 9', 9") is configured by way of machining of the at least substantially planar metal wall (2) and by way of bending of the planar metal wall (2) into the metal wall (2) which is bent in a tubular manner.

3. Tubular pressure accumulator according to Claim 1 or 2, **characterized in that** a structural feature (3, 4) which is configured by way of machining of the metal wall (2) which takes place before the welding and by way of bending of the metal wall (2) is a bore (3, 4) which is deburred on an inner side (18) of the bent and welded metal wall (2), or **in that** a structural feature (3, 4) which is configured by way of machining of the metal wall (2) which takes place before the welding and by way of bending of the metal wall (2) is a bore (3, 4) which is deburred on both sides.

4. Tubular pressure accumulator according to one of Claims 1 to 3, **characterized in that** a structural feature (3) which is configured by way of machining of the metal wall (2) which takes place before the welding and by way of bending of the metal wall (2) is a bore (3) which, with regard to a circumferential direction (25), has an opening angle (27) which is predefined by the bending radius (26) of the bending of the metal wall (2).

5. Tubular pressure accumulator according to one of Claims 1 to 4, **characterized in that** a structural feature (3) which is configured by way of machining of the metal wall (2) which takes place before the welding and by way of bending of the metal wall (2) is a continuous recess (3) which has a widened cross section (28) at least on an inner side (18) of the bent and welded metal wall (2), and/or **in that** a structural feature (3) is configured by way of a stepped bore (3) which is made in the planar metal wall (2) and by way of bending of the planar metal wall (2) into the metal wall (2) which is bent in a tubular manner.

6. Tubular pressure accumulator according to one of Claims 1 to 5, **characterized in that** a structural feature (3) which is configured by way of machining of the metal wall (2) which takes place before the welding and by way of bending of the metal wall (2) has a burr (30) on an outer side (19) of the bent and welded metal wall (2).

7. Tubular pressure accumulator according to one of Claims 1 to 6, **characterized in that** a structural feature (8) which is configured by way of machining of the metal wall (2) which takes place before the welding and by way of bending of the metal wall (2) is a flattened portion (8).

8. Tubular pressure accumulator according to one of Claims 1 to 7, **characterized in that** a structural feature (8) which is configured by way of machining of the metal wall (2) which takes place before the welding and by way of bending of the metal wall (2) is an eyelet (8).

9. Tubular pressure accumulator according to one of Claims 1 to 8, **characterized in that** a structural feature (8) which is configured by way of machining of the metal wall (2) which takes place before the welding and by way of bending of the metal wall (2) is an outwardly shaped geometry (8), in particular a bulged elevation (8).

10. Tubular pressure accumulator according to one of Claims 1 to 9, **characterized in that** a structural feature (9') which is configured by way of machining of the metal wall (2) which takes place before the welding and by way of bending of the metal wall (2) is configured as a slot (9'), and/or **in that** a structural feature (9) which is configured by way of machining of the metal wall (2) which takes place before the welding and by way of bending of the metal wall (2) is configured as a slot (9) with widened ends, and/or **in that** a structural feature (9'') which is configured by way of machining of the metal wall (2) which takes place before the welding and by way of bending of the metal wall (2) is configured as an O-shaped slot (9").

11. Tubular pressure accumulator according to one of Claims 1 to 10, **characterized in that** the welded seam (15) is arranged in a region of the bent and welded metal wall (2), which region is subjected to the lowest mechanical loading.

## Revendications

1. Accumulateur de pression de forme tubulaire (1), en particulier rampe distributrice de carburant pour moteurs à combustion interne à allumage par étincelle et compression du mélange, comprenant une paroi métallique (2) qui est cintrée sous forme tubulaire, des côtés longitudinaux (10, 11), associés l'un à l'autre, de la paroi métallique (2) cintrée sous forme tubulaire étant reliés l'un à l'autre par au moins un joint de soudure (15), la paroi métallique (2) cintrée sous forme tubulaire présentant au moins une caractéristique de construction (3 - 7, 8, 9, 9', 9'') qui est configurée au moyen d'un usinage, s'effectuant avant le soudage, de la paroi métallique (2) et du cintrage de la paroi métallique (2),
**caractérisé en ce que**
la paroi métallique (2) présente une géométrie cylindrique creuse de section transversale de forme annulaire circulaire après le cintrage.

2. Accumulateur de pression de forme tubulaire selon la revendication 1,
**caractérisé**
**en ce que** la caractéristique de construction (3 - 7, 8, 9, 9', 9'') est configurée au moyen de l'usinage de la paroi métallique (2) au moins essentiellement plane et au moyen du cintrage de la paroi métallique plane (2) pour former la paroi métallique (2) cintrée sous forme tubulaire.

3. Accumulateur de pression de forme tubulaire selon la revendication 1 ou 2,
**caractérisé**
**en ce qu'**une caractéristique de construction (3, 4) qui est configurée au moyen de l'usinage, s'effectuant avant le soudage, de la paroi métallique (2) et du cintrage de la paroi métallique (2) est un alésage ébavuré (3, 4) sur un côté intérieur (18) de la paroi métallique (2) cintrée et soudée,
ou
**en ce qu'**une caractéristique de construction (3, 4) qui est configurée au moyen de l'usinage, s'effectuant avant le soudage, de la paroi métallique (2) et du cintrage de la paroi métallique (2) est un alésage ébavuré des deux côtés (3, 4).

4. Accumulateur de pression de forme tubulaire selon l'une quelconque des revendications 1 à 3, **caractérisé**
**en ce qu'**une caractéristique de construction (3) qui est configurée au moyen de l'usinage, s'effectuant avant le soudage, de la paroi métallique (2) et du cintrage de la paroi métallique (2) est un alésage (3) qui présente, par rapport à une direction périphérique (25), un angle d'ouverture (27) prédéfini par le rayon de courbure (26) de la courbure de la paroi métallique (2).

5. Accumulateur de pression de forme tubulaire selon l'une quelconque des revendications 1 à 4,
**caractérisé**
**en ce qu'**une caractéristique de construction (3) qui est configurée au moyen de l'usinage, s'effectuant avant le soudage, de la paroi métallique (2) et du cintrage de la paroi métallique (2) est un évidement traversant (3) qui présente une section transversale élargie (28) au moins sur un côté intérieur (18) de la paroi métallique (2) cintrée et soudée,
et/ou
**en ce qu'**une caractéristique de construction (3) est configurée par un alésage étagé (3) ménagé dans la paroi métallique plane (2) et au moyen du cintrage de la paroi métallique plane (2) pour former la paroi métallique (2) cintrée sous forme tubulaire.

6. Accumulateur de pression de forme tubulaire selon l'une quelconque des revendications 1 à 5,
**caractérisé**
**en ce qu'**une caractéristique de construction (3) qui est configurée au moyen de l'usinage, s'effectuant avant le soudage, de la paroi métallique (2) et du cintrage de la paroi métallique (2) présente une bavure (30) sur un côté extérieur (19) de la paroi métallique (2) cintrée et soudée.

7. Accumulateur de pression de forme tubulaire selon l'une quelconque des revendications 1 à 6,
**caractérisé**
**en ce qu'**une caractéristique de construction (8) qui est configurée au moyen de l'usinage, s'effectuant avant le soudage, de la paroi métallique (2) et du cintrage de la paroi métallique (2) est un aplatissement (8).

8. Accumulateur de pression de forme tubulaire selon l'une quelconque des revendications 1 à 7,
**caractérisé**
**en ce qu'**une caractéristique de construction (8) qui est configurée au moyen de l'usinage, s'effectuant avant le soudage, de la paroi métallique (2) et du cintrage de la paroi métallique (2) est un passage (8).

9. Accumulateur de pression de forme tubulaire selon l'une quelconque des revendications 1 à 8,
**caractérisé**
**en ce qu'**une caractéristique de construction (8) qui est configurée au moyen de l'usinage, s'effectuant avant le soudage, de la paroi métallique (2) et du cintrage de la paroi métallique (2) est une géométrie (8) formée vers l'extérieur, en particulier un rehaussement bombé (8).

10. Accumulateur de pression de forme tubulaire selon l'une quelconque des revendications 1 à 9,
**caractérisé**
**en ce qu'**une caractéristique de construction (9') qui est configurée au moyen de l'usinage, s'effectuant avant le soudage, de la paroi métallique (2) et du cintrage de la paroi métallique (2) est configurée sous forme de trou oblong (9'),
et/ou
**en ce qu'**une caractéristique de construction (9) qui est configurée au moyen de l'usinage, s'effectuant avant le soudage, de la paroi métallique (2) et du cintrage de la paroi métallique (2) est configurée sous forme de trou oblong (9) présentant des extrémités élargies, et/ou
**en ce qu'**une caractéristique de construction (9'') qui est configurée au moyen de l'usinage, s'effectuant avant le soudage, de la paroi métallique (2) et du cintrage de la paroi métallique (2) est configurée sous forme de trou oblong (9'') en forme de O.

11. Accumulateur de pression de forme tubulaire selon l'une quelconque des revendications 1 à 10,
**caractérisé**
**en ce que** le joint de soudure (15) est disposé dans une région de la paroi métallique (2) cintrée et soudée qui est la moins sollicitée mécaniquement.
